# EUROPÄISCHE PATENTSCHRIFT

(11) **EP 2 168 191 B1**
(45) Veröffentlichungstag und Bekanntmachung des Hinweises auf die Patenterteilung: **10.08.2011**
(21) Anmeldenummer: 08801449.3
(22) Anmeldetag: 05.06.2008
(51) Int. Cl.: H01M 8/02, H01M 8/10, H01M 8/24

(54) **GASDIFFUSIONSEINHEIT FÜR EINE BRENNSTOFFZELLE**
GAS DIFFUSION UNIT FOR A FUEL CELL
UNITÉ DE DIFFUSION DE GAZ POUR UNE PILE À COMBUSTIBLE

(30) Priorität: 29.06.2007 DE 102007030343
(43) Veröffentlichungstag der Anmeldung: 31.03.2010
(73) Patentinhaber: Carl Freudenberg KG, 69469 Weinheim (DE)
(72) Erfinder: GERDING, Lars, 67663 Kaiserslautern (DE)
(86) Internationale Anmeldenummer: PCT/EP2008/004480
(87) Internationale Veröffentlichungsnummer: WO 2009/003566

(56) Entgegenhaltungen:
- EP-A- 1 633 010
- EP-A- 1 667 264
- WO-A-2005/038974
- WO-A-2007/090423
- JP-A- 2006 156 034
- US-A1- 2006 115 703

## Beschreibung

### Technisches Gebiet

Die Erfindung betrifft eine Gasdiffusionseinheit für eine Brennstoffzelle, umfassend zumindest zwei flächig ausgebildete Gasdiffusionsschichten die mit Dichtungen versehen sind, wobei die Dichtungen auf einem Substrat befestigt sind.

### Stand der Technik

Brennstoffzellen bestehen aus einer Aneinanderreihung von einzelnen Zellen. Diese bilden einen so genannten Stack oder Zellstapel, in den häufig noch zusätzliche Komponenten zur Kühlung integriert werden. Ein Stack kann dabei aus bis zu 500 einzelnen Zellen bestehen. Eine Zelle zeichnet sich durch einen schichtweisen Aufbau aus, wobei eine Zelle aus einer Anordnung gebildet durch zwei Bipolarplatten mit Gasverteilerstruktur, zwei Gasdiffusionsschichten und einer Reaktionsschicht in Form einer katalysierten Membran besteht. Jeweils zwei Gasdiffusionsschichten umgeben dabei die Reaktionsschicht und bilden eine Membran-Elektroden-Anordnung. Zur Vermeidung von Leckagen ist die Membran-Elektroden-Anordnung oder die Bipolarplatte mit einer Dichtung ausgerüstet. Leckagen können zu einer Zerstörung der Brennstoffzelle führen und senken den Wirkungsgrad der Brennstoffzelle. Aus der US 2003/0082430 A1 ist eine Gasdiffusionseinheit bekannt, bei der die Dichtung an der flächig ausgebildeten Gasdiffusionsschicht angespritzt ist. Dabei ist es bei der Montage schwierig, die Gasdiffusionsschichten so zueinander auszurichten, dass die Berührungsbereiche von Gasdiffusionsschicht und Reaktionsschicht sowie von Gasdiffusionsschicht und Bipolarplatte leckagefrei abgedichtet sind.

Das Dokument EP1633010 wird als nächstliegender Stand der Technik angesehen und offenbart eine Gasdiffusionseinheit für Brennstoffzellen, umfassend vier flächig ausgebildete Gasdiffusionsschichten, die mit Dichtungen (53) versehen sind, wobei die Dichtungen auf einem Substrat befestigt sind. EP1633010 offenbart jedoch nicht, dass das Substrat die Gasdiffusionsschichten gelenkig miteinander verbindet.

### Darstellung der Erfindung

Der Erfindung liegt die Aufgabe zugrunde eine Gasdiffusionseinheit für Brennstoffzellen bereitzustellen, die einfacher und sicher dichtend montierbar ist.

Diese Aufgabe wird mit den Merkmalen von Anspruch 1 gelöst. Auf vorteilhaften Ausgestaltungen nehmen die Unteransprüche Bezug.

Zur Lösung der Aufgabe verbindet das Substrat die Gasdiffusionsschichten gelenkig miteinander. Dabei ist im gebrauchsfertigen Zustand zwischen den Gasdiffusionsschichten eine Membran angeordnet. Durch die gelenkige Verbindung mittels des Substrates ergibt sich eine definierte Schwenkachse um die die Gasdiffusionsschichten relativ zueinander schwenkbar sind. Zur Herstellung einer Membran-Elektroden-Einheit wird zunächst die Membran zwischen den Schichten angeordnet und danach werden die Gasdiffusionsschichten aufeinander zu geschwenkt. Durch die festgelegte Schwenkbewegung ist gewährleistet, dass die beiden Gasdiffusionsschichten und deren Dichtungen ausgerichtet aufeinander angeordnet sind. Durch die genaue Ausrichtung der Dichtungen werden Leckagen zuverlässig verhindert. Das Substrat kann als Halbzeug in ein Werkzeug eingebracht werden und dann mit dem Dichtungswerkstoff umspritzt werden. Hierbei ist besonders vorteilhaft, dass das Substrat formstabil ist, also im Gegensatz zu vielen Dichtungswerkstoffen nicht schrumpft. Es wird also wirksam verhindert, dass sich die Gasdiffusionseinheit, bestehend aus zwei Gasdiffusionsschichten, aufgrund von Schrumpfungsvorgängen des Dichtungswerkstoffs verzieht. Das Substrat ist vorzugsweise flächig ausgebildet und weist zwei Ausnehmungen auf, in denen die Gasdiffusionsschichten angeordnet werden. Die Ausnehmungen können die gleichen Abmessungen wie die Gasdiffusionsschichten aufweisen oder sie können so gestaltet sein, dass die Gasdiffusionsschichten die Ausnehmungen überlappen. Die Abmessungen der Ausnehmungen können auch größer sein als die Abmessungen der Gasdiffusionsschichten. Die Verbindung von Substrat und Gasdiffusionsschicht erfolgt vorzugsweise stoffschlüssig über die Dichtung, die materialeinheitlich und einstückig auf Substrat und Gasdiffusionsschicht angeordnet wird. In anderen Ausführungen kann das Substrat auch formschlüssig oder form- und stoffschlüssig mit der Gasdiffusionsschicht verbunden sein. Dazu wird das Substrat in Ausnehmungen angeordnet, die sich in der Dichtung befinden.

Die Dichtungen können aus einem elastischen, polymeren Werkstoff bestehen. Elastomere Werkstoffe sind elastisch, hochverformbar und einfach zu verarbeiten. Die Dichtungen können beispielsweise aus Silikon, FKM (Fluorelastomer), EPDM (Ethylen-Propylen-Dien-Monomer), PIB (Polyisobutylen), PU (Polyurethan), BR (Butadien) oder einer Mischung hieraus bestehen. Durch die Mischung lassen sich gezielt die vorteilhaften Eigenschaften der einzelnen Werkstoffe kombinieren. Fluorelastomere zeichnen sich durch eine gute Temperatur- und Chemikalienbeständigkeit aus, die sich in der Brennstoffzellenumgebung als besonders vorteilhaft erweisen. In anderen Ausgestaltungen sind auch thermoplastische Werkstoffe, beispielsweise thermoplastische Elastomere (TPE) als Dichtungswerkstoff denkbar. Letztere weisen insbesondere den Vorteil auf, dass sie sich wie thermoplastische Materialien in kurzen Taktzeiten verarbeiten lassen.

Das Substrat kann als Kunststofffolie ausgebildet sein. Kunststofffolien sind einfach und kostengünstig herstellbar. Dabei sind Kunststoffqualitäten verfügbar, die beständig gegenüber den in Brennstoffzellen vorherrschenden Medien und Temperaturen sind. Die Herstellung der Substrate erfolgt über flächige Kunststofflagen aus den die Substrate ausgestanzt werden. Als Material für das Substrat ist insbesondere Polyethylennaphtalat (PEN) und Polyetherimid (PEI) denkbar. Diese Werkstoffe sind chemisch beständig und thermisch belastbar.

Denkbare Fertigungsverfahren zum Anbringen einer Dichtung an die Gasdiffusionsschicht sind Spritzgießen, Pressen, Kleben und Gießen. Pressen ist dabei ein insbesondere durch geringe Werkzeug- und Maschinenkosten günstiges Fertigungsverfahren, das es ermöglicht die Dichtungen mit den brennstoffzellentypischen engen Toleranzen, bei hoher Maßhaltigkeit herzustellen. Kleben ermöglicht eine baukastenartige Fertigung, in der verschiedene Ausführungen von Dichtungen mit verschiedenen Ausführungen von Gasdiffusionsschichten kombiniert werden können, und ist durch seine Flexibilität besonders bei kleineren Stückzahlen geeignet. Die Dichtungen können an die Gasdiffusionsschicht angespritzt sein. Spritzgießen ist ein großserientaugliches Fertigungsverfahren. Durch das Anspritzen an die Gasdiffusionsschichten bildet sich eine umlaufende Dichtung durch die eine zwischen den Gasdiffusionsschichten angeordnete Reaktionsschicht vollständig umschlossen wird, so dass Leckagen vermieden werden. Beim Spritzgießen ist vorteilhaft, dass das Dichtungsmaterial welches an die Gasdiffusionsschicht angespritzt wird, in die Gasdiffusionsschicht eindringt. Das Eindringen erfolgt insbesondere bei Gasdiffusionsschichten die aus einem Vliesstoff gebildet sind. Dadurch verbessern sich nochmals die Dichtwirkung sowie die Handhabbarkeit.

Die Dichtungen können zumindest einen wenigstens teilweise umlaufenden Dichtwulst aufweisen. Der Dichtwulst kann insbesondere V-förmig ausgebildet sein. Ein Dichtwulst verbessert die Dichtwirkung und vereinfacht die Montage der Membran-Elektroden-Einheit. Zur Montage werden die miteinander verbundenen Gasdiffusionsschichten mit der dazwischen angeordneten Membran beispielsweise durch Schraubverbindungen zwischen Bipolarplatten miteinander verpresst. Aufgrund der geringen Kontaktfläche des Dichtwulstes ist die Anpresskraft zunächst gering, steigt aber mit zunehmender Komprimierung stetig an. Nach vollständiger Komprimierung des Dichtwulstes gelangt der benachbarte eben ausgebildete Dichtungsbereich in Eingriff und die Anpresskraft steigt überproportional an, was als Indikator für eine korrekte Anpresskraft und damit Dichtkraft sein kann. Ein Überpressen der Dichtung durch zu große Anpresskraft wird dadurch vermieden. Des Weiteren gleicht der Dichtwulst Toleranzen und Unebenheiten in der abzudichtenden Oberfläche aus.

Die Dichtungen können stoffschlüssig auf dem Substrat befestigt sein. Die Dichtung wird vorzugsweise mittels Spritzgießen auf das Substrat und die Gasdiffusionsschicht aufgetragen. Hierbei ergibt sich nach erkalten des Dichtungsmaterials eine stoffschlüssige Verbindung. Es können in dem Substrat Ausnehmungen vorgesehen sein, durch die der Dichtungswerkstoff fließen kann. Hierbei ergibt sich ein Formschluss und eine verbesserte Haftung der Dichtung auf dem Substrat.

Das Substrat kann derart ausgebildet sein, dass sich zwischen den Gasdiffusionsschichten ein Filmscharnier bildet. Dazu ist das Substrat so ausgebildet, dass es zwei Gasdiffusionsschichten aufnehmen kann. Diese werden durch den Dichtungswerkstoff fest mit dem Substrat verbunden. Nach Einlegen der Membran werden die Gasdiffusionssichten über das Substrat aufeinander zu geschwenkt. Ein durch das Substrat gebildete Filmscharnier ist sehr robust, weist verbesserte mechanische Eigenschaften auf und kann im Gegensatz zu solchen aus elastomeren Werkstoffen nicht einreißen. Es sind auch große Abmessungen möglich.

Auf den Gasdiffusionsschichten können Verschlusselemente angeordnet sein. Die Verschlusselemente befinden sich dabei vorzugsweise im Randbereich der Dichtung und sind in die Dichtung integriert und materialeinheitlich mit dieser ausgeführt. Diese Verschlusselemente der Gasdiffusionsschichten sind vorzugsweise so ausgebildet, dass sie kongruent zueinander sind. So können die Gasdiffusionsschichten nach dem Einlegen der Membran und dem Verschwenken miteinander verbunden werden. Dadurch ist die Membran verliersicher zwischen den Gasdiffusionsschichten gehalten und das Handling und die Montage vereinfacht sich. Die Verschlusselemente sind vorzugsweise so ausgebildet, dass sich eine lösbare Verbindung ergibt. Wenn das Verschlusselement in die Dichtung integriert ist, ist es aufgrund des elastomeren Werkstoffs der Dichtung besonders leicht bedienbar.

Die Verschlusselemente können durch Formschlusselemente gebildet sein. Derartige Verschlusselemente sind beispielsweise Schwalbenschwanznuten in einer Gasdiffusionsschicht und entsprechende Vorsprünge in der anderen Gasdiffusionsschicht. Die Nut und der Vorsprung sind dabei vorzugsweise in den Randbereich der Dichtung eingebracht. Generell weist ein Verschlusselement eine Hinterschneidung auf, in die ein passendes Gegenstück des anderen Verschlusselementes einrastet. Formschlusselemente sind meist einfach lösbare und auch einfach fügbare Verbindungen, insbesondere wenn sie sich in elastomeren Werkstoffen befinden.

Die Verschlusselemente können integrale Bestandteile der Dichtungen sein. Dadurch sind sie besonders einfach herstellbar und sind aufgrund des elastomeren Werkstoffs der Dichtungen auch einfach bedienbar. Da die Dichtungen vorzugsweise durch Spritzgießen hergestellt werden können die Verschlusselemente auch einfach und kostengünstig im Formwerkzeug vorgesehen werden.

### Kurzbeschreibung der Zeichnung

Einige Ausführungsbeispiele der erfindungsgemäßen Gasdiffusionseinheit werden nachfolgend anhand der Figuren näher erläutert. Diese zeigen, jeweils schematisch:
- Fig. 1: die Gasdiffusionseinheit in der Draufsicht;
- Fig. 2: die Gasdiffusionseinheit in der Seitenansicht;
- Fig. 3a: eine Gasdiffusionseinheit mit Verschlusselement in der Seitenansicht;

- Fig. 3b: die Gasdiffusionseinheit gemäß Fig. 3b zusammengeklappt mit eingelegter Membran in der Seitenansicht;
- Fig. 4: eine Brennstoffzelle mit erfindungsgemäßen Gasdiffusionseinheiten.

### Ausführung der Erfindung

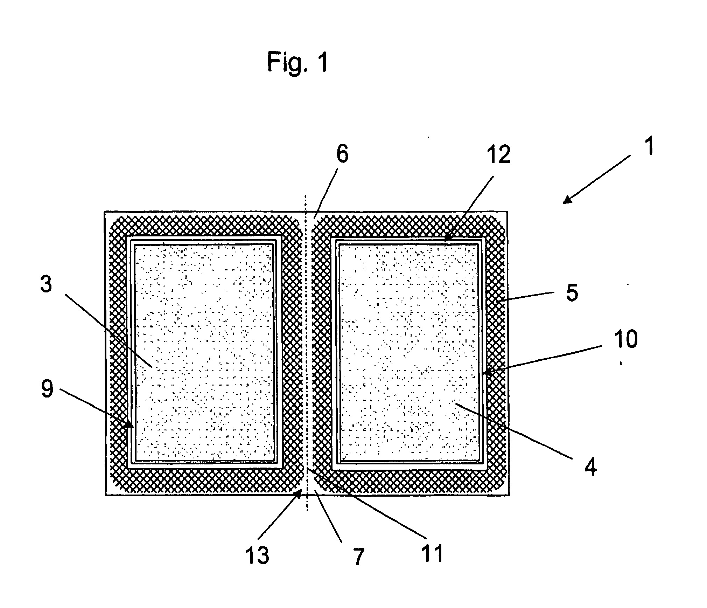

Figur 1 zeigt in der Draufsicht eine Gasdiffusionseinheit 1 für eine Brennstoffzelle 2, bestehend aus zwei flächig ausgebildeten Gasdiffusionsschichten 3, 4 die benachbart zueinander angeordnet sind. Die Gasdiffusionsschichten 3, 4 sind in Ausnehmungen 9, 10 eines Substrates 6 angeordnet. Das Substrat 6 ist flächig ausgebildet und besteht aus Kunststoff, insbesondere aus PEN oder PEI. Die Gasdiffusionsschichten 3, 4 bestehen aus einem karbonisierten Vliesstoff, wobei auf dem Substrat 6 sowie an den Rändern der Gasdiffusionsschichten 3, 4 Dichtungen 5 angeordnet sind. Die Dichtungen 5 bestehen in dieser Ausführung aus einer Zusammensetzung mit Silikon und wurden mittels Spritzgießen auf dem Substrat 6 und an den Gasdiffusionsschichten 3, 4 fixiert, wobei das Dichtungsmaterial in die Poren des Vliesstoffes eingedrungen ist und sich stoffschlüssig mit dem Substrat verbindet. In anderen Ausführungen kann die Dichtung 5 auch aus thermoplastischen Elastomeren, EPDM (Ethylen-Propylen-Dien-Monomer), PIB (Polyisobutylen), PU (Polyurethan), BR (Butadien) oder einer Zusammensetzung aus diesen Werkstoffen einschließlich Silikon bestehen. Die Gasdiffusionsschichten 3, 4 sind durch das Substrat 6 gelenkig miteinander verbunden.

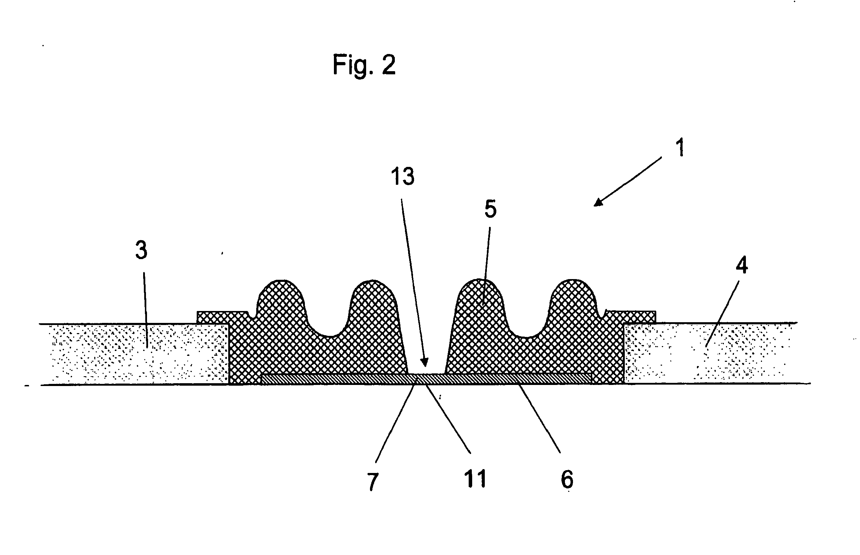

Figur 2 zeigt die Gasdiffusionseinheit 1 gemäß Figur 1 in der Seitenansicht. Entlang der Mittellinie 11 des Substrates 6 weist die Dichtung 5 eine Aussparung 13 auf, so dass sich hier ein Filmscharnier 7 bildet, über das beide Seiten des Substrates 6 mit den zugeordneten Gasdiffusionsschichten 3, 4 geschwenkt werden kann. Die Dichtungen 5 sind profiliert und weisen V-förmige Vorsprünge auf.

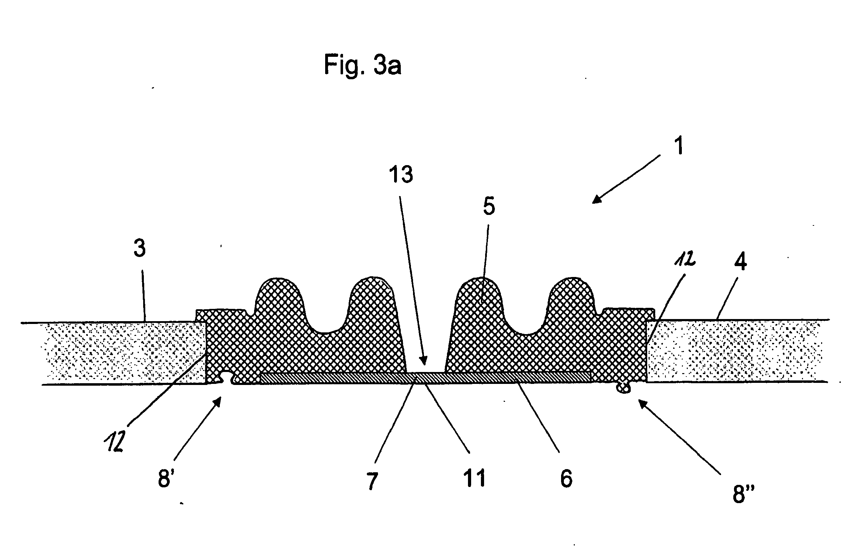

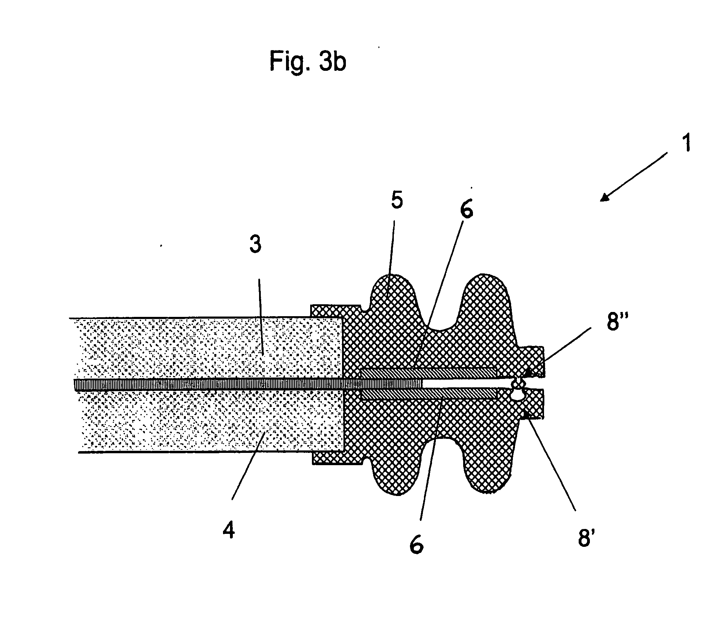

Die Figuren 3a und 3b zeigen eine Gasdiffusionseinheit 1 gemäß Figur 2. In diesen Ausführungen sind die Dichtungen 5 ebenfalls profiliert und weisen an den den Gasdiffusionsschichten 3, 4 zugeordneten Begrenzungsrändem 12 als integralen Bestandteil jeweils ein Verschlusselement 8 auf, wobei die Verschlusselemente 8 der jeweiligen Gasdiffusionsschichten 3, 4 kongruent zueinander geformt sind und eine formschlüssige Verbindung der beiden Gasdiffusionsschichten 3, 4 ermöglichen. Ein Verschlusselement 8' weist dazu eine umlaufende kreisförmige Ausnehmung auf und das andere Verschlusselement 8" weist einen kreisförmigen Vorsprung auf. Figur 3b zeigt die Gasdiffusionseinheit 1 bei der die Gasdiffusionsschichten 3, 4 um das Substrat 6 geschwenkt wurden und dadurch aufeinander angeordnet sind. Die Gasdiffusionsschichten sind durch die Verschlusselemente 8 miteinander verriegelt. Zwischen den Gasdiffusionsschichten 3, 4 ist eine Membran angeordnet, die aufgrund der Verschlusselemente 8 verliersicher angeordnet ist.

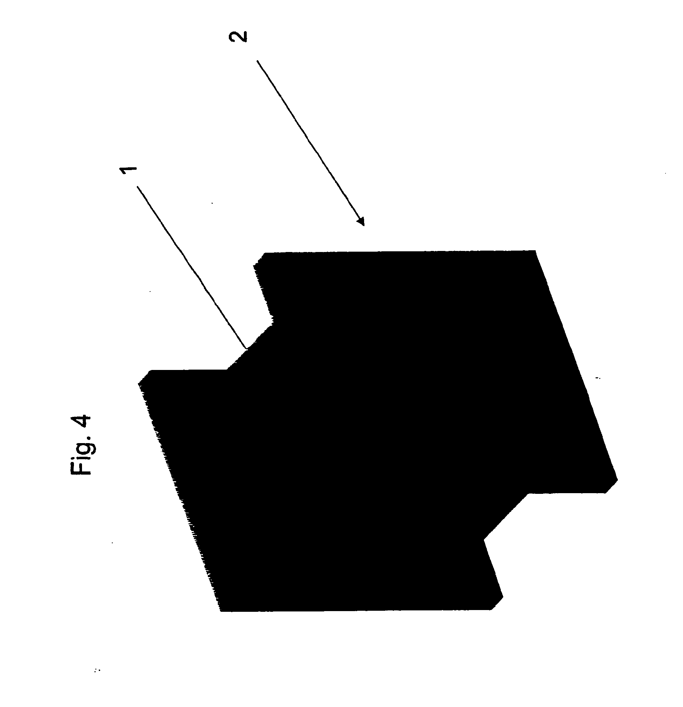

Figur 4 zeigt eine Brennstoffzelle 2 für mobile Anwendungen. Die Gasdiffusionseinheiten 1, die in der Brennstoffzelle 2 angeordnet sind, weisen eine Dicke von weniger als einen Millimeter auf.

## Patentansprüche

1. Gasdiffusionseinheit (1) für eine Brennstoffzelle (2), umfassend zumindest zwei flächig ausgebildete Gasdiffusionsschichten (3, 4) die mit Dichtungen (5) versehen sind, wobei die Dichtungen (5) auf einem Substrat (6) befestigt sind, **dadurch gekennzeichnet, dass** das Substrat (6) die Gasdiffusionsschichten (3, 4) gelenkig miteinander verbindet.

2. Gasdiffusionseinheit nach Anspruch 1, **dadurch gekennzeichnet, dass** das Substrat (6) als Kunststofffolie ausgebildet ist.

3. Gasdiffusionseinheit nach Anspruch 1 oder 2, **dadurch gekennzeichnet, dass** die Dichtungen (5) stoffschlüssig auf dem Substrat (6) befestigt sind.

4. Gasdiffusionseinheit nach einem der Ansprüche 1 bis 3, **dadurch gekennzeichnet, dass** das Substrat (6) derart ausgebildet ist, dass sich zwischen den Gasdiffusionsschichten (3, 4) ein Filmscharnier (7) bildet.

5. Gasdiffusionseinheit nach einem der Ansprüche 1 bis 4, **dadurch gekennzeichnet, dass** auf den Gasdiffusionsschichten (3, 4) Verschlusselemente (8) angeordnet sind.

6. Gasdiffusionseinheit nach Anspruch 5, **dadurch gekennzeichnet, dass** die Verschlusselemente (8) durch Formschlusselemente gebildet sind.

7. Gasdiffusionseinheit nach Anspruch 6, **dadurch gekennzeichnet, dass** die Verschlusselemente (8) integrale Bestandteile der Dichtungen (5) sind.

## Claims

1. Gas diffusion unit (1) for a fuel cell (2), comprising at least two two-dimensionally formed gas diffusion layers (3, 4) which are provided with seals (5), the seals (5) being fastened on a substrate (6), **characterized in that** the substrate (6) joins the gas diffusion layers (3, 4) to one another in a jointed manner.

2. Gas diffusion unit according to Claim 1, **characterized in that** the substrate (6) is formed as a film or sheet of plastic.

3. Gas diffusion unit according to Claim 1 or 2, **characterized in that** the seals (5) are fastened on the substrate (6) with a material bond.

4. Gas diffusion unit according to one of Claims 1 to 3, **characterized in that** the substrate (6) is formed in such a way that a film hinge (7) forms between the gas diffusion layers (3, 4).

5. Gas diffusion unit according to one of Claims 1 to 4, **characterized in that** closure elements (8) are arranged on the gas diffusion layers (3, 4).

6. Gas diffusion unit according to Claim 5, **characterized in that** the closure elements (8) are formed by form-fitting elements.

7. Gas diffusion unit according to Claim 6, **characterized in that** the closure elements (8) are integral parts of the seals (5).

## Revendications

1. Unité (1) de diffusion de gaz pour cellule à combustible (2), comprenant au moins deux couches étendues (3, 4) de diffusion de gaz dotées de joints d'étanchéité (5), les joints d'étanchéité (5) étant fixés sur un substrat (6),
**caractérisée en ce que**
le substrat (6) relie l'une à l'autre de manière articulée les couches (3, 4) de diffusion de gaz.

2. Unité de diffusion de gaz selon la revendication 1, **caractérisée en ce que** le substrat (6) est configuré comme feuille de matière synthétique.

3. Unité de diffusion de gaz selon les revendications 1 ou 2, **caractérisée en ce que** les joints d'étanchéité (5) sont fixés en correspondance de matière sur le substrat (6).

4. Unité de diffusion de gaz selon l'une des revendications 1 à 3, **caractérisée en ce que** le substrat (6) est configuré de telle sorte qu'un film de charnière (7) soit formé entre les couches (3, 4) de diffusion de gaz.

5. Unité de diffusion de gaz selon l'une des revendications 1 à 4, **caractérisée en ce que** des éléments de fermeture (8) sont disposés sur les couches (3, 4) de diffusion de gaz.

6. Unité de diffusion de gaz selon la revendication 5, **caractérisée en ce que** les éléments de fermeture (8) sont formés par des éléments de fermeture en correspondance géométrique.

7. Unité de diffusion de gaz selon la revendication 6, **caractérisée en ce que** les éléments de fermeture (8) font partie intégrante des joints d'étanchéité (5).
